# EUROPÄISCHE PATENTANMELDUNG

(11) **EP 4 539 601 A1**
(43) Veröffentlichungstag der Anmeldung: **16.04.2025**
(21) Anmeldenummer: 24200951.2
(22) Anmeldetag: 18.09.2024
(51) Int. Cl.: H05B 6/64, F24C 7/08

(54) **KERNTEMPERATURFÜHLER, GARGERÄT MIT KERNTEMPERATURFÜHLER SOWIE MIKROWELLENFALLE**

(30) Priorität: 12.10.2023 DE 102023127957
(71) Anmelder: Rational Aktiengesellschaft, 86899 Landsberg am Lech (DE)
(72) Erfinder: Koenen, Christian, 86899 Landsberg am Lech (DE); Selig, Peter, 86899 Landsberg am Lech (DE)
(74) Vertreter: Prinz & Partner mbB

(57) **Zusammenfassung**

Die Erfindung betrifft einen Kerntemperaturfühler (28) für ein Kombinationsgargerät (10), mit einer Mikrowellenfalle (34) mit einem Fallenabschnitt (58), der eine Öffnung (66) aufweist, die von einem Randbereich (68) umgeben ist, wobei im Fallenabschnitt (58) ein dielektrisches Füllelement (72) angeordnet ist. Der Randbereich (68) ist gegenüber dem Füllelement (72) zumindest bereichsweise zurückgesetzt ist, sodass dieses über den Randbereich (68) zumindest bereichsweise hervorsteht. Ferner betrifft die Erfindung eine Kombinationsgerät (10) mit der Mikrowellenfalle (34) sowie die Mikrowellenfalle (34).

## Beschreibung

Die Erfindung betrifft einen Kerntemperaturfühler mit einer Mikrowellenfalle, ein Gargerät mit einem Kerntemperaturfühler sowie eine Mikrowellenfalle.

In Profi- beziehungsweise Großküchen werden Kombinationsgargeräte verwendet, die in der Lage sind, ein Gargut in einem Garraum des Kombinationsgargeräts auf unterschiedliche Weise garen zu können. Dabei kommt neben den klassischen Garverfahren, die mit Heißluft und/oder Dampf arbeiten, bei modernen Kombinationsgargeräten auch häufig Mikrowellenstrahlung zum Einsatz. Die Energie der Mikrowellenstrahlung kann zum Garen des Garguts alleine oder in Kombination mit den vorgenannten Verfahren genutzt werden. Für das Einspeisen von Mikrowellen in den Garraum können Magnetrons oder Halbleiterbauteile als Mikrowellenquellen verwendet werden.

Um bestmögliche Ergebnisse beim Garen eines Garguts zu erzielen, ist es von Vorteil, den Garprozess möglichst präzise zu überwachen, um bei Bedarf bestimmte Garparameter wie Temperatur, Luftfeuchtigkeit und/oder Garzeit zu verändern.

In modernen Gargeräten werden hierfür unter anderem Kerntemperaturfühler verwendet. Ein Kerntemperaturfühler weist typischerweise eine mit Temperatursensoren ausgestattete Messlanze auf, die vor Beginn des Garprozesses in das Gargut eingesteckt wird. Die Temperatursensoren messen während des Garvorgangs die im Kern des Garguts vorliegenden Kerntemperaturen und übermitteln diese an eine Auswerteeinheit des Gargeräts. Die gemessenen Kerntemperaturen ermöglichen es, den Gargrad des Garguts zu ermitteln, sodass der Garvorgang auf Basis dieser Informationen geregelt werden kann, um das gewünschte Garergebnis zu erzielen.

Im Mikrowellenbetrieb ergibt sich beim Einsatz des Kerntemperaturfühlers das Problem, dass die Messlanze als eine Antenne wirken kann, welche die eingespeisten Mikrowellen empfängt. Dies führt zu ungewünschten elektrischen Strömen auf der Außenseite des Kerntemperaturfühlers, so genannte Mantelwellen, was zu einer Temperaturerhöhung im Kerntemperaturfühler führen kann. Hierdurch kann sich der Kerntemperaturfühler so stark aufheizen, dass der Kerntemperaturfühler beschädigt wird. Dies kann insbesondere dann auftreten, wenn sich der Kerntemperaturfühler in einer Parkposition befindet, also nicht in das Gargut eingesteckt ist.

Sofern der Kerntemperaturfühler in das Gargut eingesteckt ist, kann das Gargut lokal im Bereich der Messlanze überproportional erwärmt werden. Auch können durch die ungewollte Erhitzung des Kerntemperaturfühlers, insbesondere der Temperatursensoren, die gemessenen Temperaturen verfälscht werden.

Insofern ist es die Aufgabe der vorliegenden Erfindung, eine Vorrichtung bereitzustellen, um im eingeschalteten Mikrowellenbetrieb eines Kombinationsgargeräts, Beschädigungen am Kerntemperaturfühler, eine ungewünschte Erwärmung des Garguts und fehlerhafte Messungen zu verhindern.

Die Aufgabe wird erfindungsgemäß gelöst durch einen Kerntemperaturfühler für ein Kombinationsgargerät, mit einem Messabschnitt und einen an den Messabschnitt angrenzenden Griffabschnitt. Der Kerntemperaturfühler weist eine Mikrowellenfalle auf. Die Mikrowellenfalle weist ferner einen zylindrischen Fallenabschnitt auf, wobei der Fallenabschnitt topfförmig ausgebildet ist, sodass der Fallenabschnitt am ersten Ende einen Boden und am zweiten Ende eine Öffnung aufweist, die dem Messabschnitt zugewandt ist. Die Öffnung ist von einem Randbereich umgeben. Im Fallenabschnitt ist ein dielektrisches Füllelement angeordnet. Der Randbereich ist gegenüber dem Füllelement zumindest bereichsweise zurückgesetzt ist, sodass dieses zumindest bereichsweise über den Randbereich in Richtung des Messabschnitts hervorsteht.

Es hat sich herausgestellt, dass ein topfförmiger Fallenabschnitt, der mit seiner offenen Seite in Richtung Messabschnitt ausgerichtet ist, also im eingesteckten Zustand in Richtung Gargut zeigt, einen übermäßigen Energieeintrag durch Mikrowellenstrahlung in den Messabschnitt verhindert. Folglich kann vermieden werden, dass sich das Gargut im Bereich der Einstichstelle des Messabschnitts überproportional erwärmt. Der Messabschnitt und darin enthaltende Temperatursensoren werden ebenfalls wirksam geschützt.

Ferner ergibt sich eine synergistische Wechselwirkung zwischen der Ausrichtung der Mikrowellenfalle und der Ausgestaltung des Randbereichs des Fallenabschnitts. Durch die Ausgestaltung des Randbereichs erwärmt sich der Griffabschnitt, der durch die Verlustwärme in der Mikrowellenfalle erwärmt wird, während des Garvorgangs weniger. Dies gilt auch für den Fall, dass sich der Kerntemperaturfühler in der Parkposition befindet, also nicht ins Gargut eingesteckt ist. Da die Lebensdauer des Kerntemperaturfühlers wesentlich von der Lebensdauer des Griffabschnitts abhängt, kann die Lebensdauer des Kerntemperaturfühlers insgesamt verlängert werden, da die Belastung auf den Griffabschnitt reduziert wurde.

Die im Fallenabschnitt eingefangene Mikrowellenstrahlung wird zumindest teilweise in Wärme umgewandelt, was dazu führen kann, dass sich die Wärme im Fallenabschnitt staut. Da der Randbereich zumindest bereichsweise zurückgesetzt ist, kann die Wärme an die Umgebung abgegeben werden, wodurch der Wärmestau abgebaut oder sogar vermieden wird. Genauer betrachtet erfolgt der Wärmeübertrag vom Fallenabschnitt an die Umgebung durch den Bereich des dielektrischen Füllelements, der über den Randbereich des Fallenabschnitts hervorsteht. Somit wird weniger Wärme in den Griffabschnitt transportiert, der sich daher weniger stark erwärmt.

Unter einem "Messabschnitt" ist derjenige Bereich gemeint, der dazu dient, im eingesteckten Zustand die Temperatur in einem Gargut zu messen. Beispielsweise kann dafür im Messabschnitt mindestens ein Temperatursensor vorgesehen sein. Der Messabschnitt muss hierfür nicht vollständig in das Gargut eingesteckt sein. Auch wird der Messabschnitt als Messlanze bezeichnet.

Mit "topfförmiger Fallenabschnitt" ist der Bereich der Mikrowellenfalle gemeint, der elektromagnetische Wellen im Mikrowellenbereich einfängt. Dazu weist dieser eine geometrische Tiefe auf, gemessen vom Boden bis zur Öffnung, die spezifisch für mindestens eine elektrische Länge der im Garraum verwendeten elektromagnetischen Strahlung ist, um diese im Fallenabschnitt einzufangen.

Unter dem Begriff "Griffabschnitt" ist derjenige Bereich des Kerntemperaturfühlers zu verstehen, an dem der Kerntemperaturfühler von einem Benutzer gehalten werden kann. Dazu kann der Griffabschnitt beispielsweise eine ergonomisch an die Hand angepasste Form aufweisen, sodass der Kerntemperaturfühler im Garraum auf einfache Weise gehandhabt werden kann.

Die Mikrowellenfalle kann am Übergang zwischen dem Messabschnitt und dem Griffabschnitt angeordnet sein, also in einem Bereich zwischen dem Messabschnitt und dem Griffabschnitt. Der Fallenabschnitt kann sich mindestens teilweise in den Messabschnitt und/oder in den Griffabschnitt hineinerstrecken. Es ist denkbar, dass der Fallenabschnitt vollständig im Messabschnitt angeordnet ist und lediglich an dem Griffabschnitt angrenzt oder umgekehrt.

Grundsätzlich ist die Mikrowellenfalle, insbesondere der Fallenabschnitt, höchstens nur teilweise vom Griffabschnitt umgeben. Anders ausgedrückt ist die Mikrowellenfalle, insbesondere der Fallenabschnitt, nicht vollständig vom Griffabschnitt umgeben.

Zumindest ein Teil der Mikrowellenfalle, insbesondere ein Teil des Fallenabschnitts, ist demnach direkt der Umgebung ausgesetzt, sodass ein (direkter) Wärmetransport von der Mikrowellenfalle an die Umgebung stattfindet. Dies wäre beispielsweise dann nicht möglich, wenn die Mikrowellenfalle vollständig im Griffabschnitt bzw. Griff integriert wäre, wie dies der Fall ist, wenn die Mikrowellenfalle im Griff eingebettet ist..

Ein Aspekt sieht vor, dass der Randbereich eine kammartige Struktur aufweist, die mindestens zwei, von einer Aussparung getrennte Zahnelemente umfasst, die sich mit ihrem freien Ende in Richtung Messabschnitt erstrecken, wobei sich das Füllelement an die freien Enden der Zahnelemente bündig anschließt. In dieser Ausführungsform steht das Füllelement demnach in den Bereichen über den Randbereich hervor, in denen die Aussparung zwischen zwei Zahnelementen vorgesehen ist. Insgesamt ergibt sich also eine freiliegende Oberfläche des dielektrischen Füllelements, die aus mehreren separaten Teilflächen gebildet ist, nämlich denen in den Aussparungen zwischen zwei benachbarten Zahnelementen.

Die Herstellung des dielektrischen Füllelements vereinfacht sich aufgrund der kammartigen Struktur. Üblicherweise muss das dielektrische Füllelement aufwendig hergestellt werden, weil nur wenig Toleranzen erlaubt sind, um die Funktionsweise der Mikrowellenfalle zu gewährleisten. Dies liegt daran, dass die geometrischen Maße des topfförmigen Fallenabschnitts mit dem darin befindlichen dielektrischen Füllelement möglichst exakt eingehalten werden müssen, damit die Mikrowellenfalle auf die im Garraum verwendete Wellenlänge der Mikrowellenstrahlung abgestimmt ist. Das im topfförmigen Abschnitt eingesetzte dielektrische Füllelement wirkt für die eintreffende Wellenlänge der Mikrowellenstrahlung als ein Dielektrikum, sodass deren elektrische Länge verändert wird. Diese Veränderung der elektrischen Länge hängt vor allem von dem verwendeten Material ab. Die Toleranzempfindlichkeit des Füllelements wird insbesondere dadurch herabgesetzt, dass die Bandbreite der Fallenfunktion durch den Einsatz der kammartigen Struktur vergrößert ist. Mit der Bandbreite ist die Wellenlänge gemeint, welche die Mikrowellenfalle einfangen bzw. dämpfen kann. Im vorliegenden Fall ergeben sich nämlich zwei verschiedene Fallentiefen, zum einen eine erste Fallentiefe durch die freien Enden der Zahnelemente bis hin zum Boden und zum anderen eine zweite Fallentiefe durch den Rand einer Basis bis hin zum Boden, wobei sich die Zahnelemente ausgehend von diesem Rand der Basis aus in Richtung des Messabschnitts erstrecken. Hierdurch ist die Mikrowellenfalle spezifisch für mindestens zwei verschiedene Wellenlängen, insbesondere für einen Wellenlängenbereich bzw. ein Frequenzband. Die beiden Fallentiefen entsprechen also zwei Frequenzen, die die Randbereiche des abgedeckten Spektrums der Mikrowellenfalle definieren. Folglich ist die Bandbreite der Mikrowellenfalle vergrößert.

Die Zahnelemente haben eine größere Breite als die Aussparungen. Anders ausgedrückt decken die einzelnen Zahnelemente jeweils einen größeren Winkelbereich ab als eine jeweilige Aussparung. Beispielsweise ist ein Zahnelement etwa 2- bis 3-mal so breit wie eine Aussparung.

Gemäß einem weiteren Aspekt sind die Zahnelemente entlang des Randbereichs gleichmäßig verteilt. Dies bedeutet, dass die Aussparungen zwischen zwei benachbarten Zahnelementen einen gleichen Winkelbereich abdecken. Eine gleichmäßige Verteilung ermöglicht eine homogene Wirkung der Mikrowellenfalle über den gesamten Öffnungsquerschnitt der Mikrowellenfalle, insbesondere des Fallenabschnitts.

Alternativ zur kammartigen Struktur kann vorgesehen sein, dass der Randbereich den Umfang des Füllelements stufenlos und ringförmig umgibt. Das dielektrische Füllelement, das über den Randbereich zumindest bereichsweise hervorsteht, bildet somit einen scheibenförmigen Abschnitt aus, der vollständig freiliegend ist. Die freiliegende Oberfläche des dielektrischen Füllelements entspricht also einer Oberfläche eines Kreiszylindermantels. Zudem ist die freiliegende Oberfläche aus einer einzigen zusammenhängenden Oberfläche gebildet.

Gemäß einem ersten Aspekt der Erfindung ist es vorgesehen, dass der Randbereich zumindest bereichsweise um eine Länge von 2 bis 10 mm gegenüber dem Füllelement zurückgesetzt ist, bevorzugt von 3 - 6 mm. Ein Zurücksetzen des Randbereichs gegenüber dem Füllelement um die oben genannten Längen hat sich als besonders vorteilhaft erwiesen, um eine übermäßig starke Erhitzung des Griffabschnitts während des Mikrowellenbetriebs zu erreichen.

Ein anderer Aspekt der Erfindung sieht vor, dass das Füllelement über eine Stirnseite den Boden des Fallenabschnitts sowie entlang seines Außenumfangs eine Innenseite des Fallenabschnitts kontaktiert. Dadurch kann das Füllelement von dem topfförmigen Fallenabschnitt verliersicher gehalten werden.

Grundsätzlich kann der Fallenabschnitt im Querschnitt kreiszylindrisch geformt sein. Dies ermöglicht eine besonders einfache Ausgestaltung einer Mikrowellenfalle, um Mikrowellen zu dämpfen bzw. abzufangen, die entlang der Hülle in Richtung Griffabschnitt propangieren.

Insbesondere ist der Fallenabschnitt rotationssymmetrisch ausgebildet.

Gemäß einem weiteren Aspekt der Erfindung umgibt der Fallenabschnitt eine Hülle, die sich vom Messabschnitt zum Griffabschnitt durch einen Durchgang im Boden des Fallenabschnitts hindurch erstreckt. In der Hülle kann die für den Messabschnitt benötigte Sensorik untergebracht werden. Demnach ist die Hülle dazu eingerichtet, mindestens ein für den Messabschnitt benötigtes Kabelelement zu führen. Folglich kann durch die Hülle eine Verbindung zwischen dem Griffabschnitt und dem Messabschnitt bereitgestellt werden, ohne die Fallenwirkung der Mikrowellenfalle zu beeinträchtigen.

Gemäß einem weiteren Aspekt der Erfindung ist es vorgesehen, dass das Füllelement als ein Hohlzylinder geformt ist, der eine Durchgangsöffnung aufweist, die mit dem Durchgang im Boden fluchtet, sodass sich die Hülle durch den Durchgang und die Durchgangsöffnung zumindest teilweise erstreckt, wobei sich die Durchgangsöffnung vollständig durch das Füllelement hindurch erstreckt. Die Hülle kann also als ein im Querschnitt kreiszylindrischer Hohlzylinder ausgeführt sein. Das Füllelement kann zwischen der Hülle und dem Fallenabschnitt angeordnet sein. Dies ergibt eine besonders effiziente Anordnung von Fallenabschnitt, Füllelement und Hülle auf einem möglichst kleinen Bauraum. Zudem wird durch diese Anordnung die Fallenfunktion nicht beeinträchtigt.

Gemäß einem anderen Aspekt der Erfindung sind das Füllelement, die Hülle und der Fallenabschnitt koaxial zueinander angeordnet. Dies stellt eine besonders platzsparende Anordnung innerhalb der Mikrowellenfalle dar. Zudem sind die vorgenannten Elemente durch die koaxiale Anordnung mit ihren Längsrichtungen zum Messabschnitt hin angeordnet, wodurch ein Ausbreiten von Mikrowellen in Richtung Griffabschnitt gedämpft bzw. verhindert wird.

Gemäß einem weiteren Aspekt ist der Fallenabschnitt am Durchgang mit der Hülle kontaktiert. Durch diesen Kontakt wird auf einfache Weise eine Mikrowellenfalle bereitgestellt, die in Richtung Griffabschnitt propangierende elektromagnetische Wellen daran hindert, den am Griffabschnitt zu erreichen. Ferner wird durch den Kontakt zwischen Durchgang und Hülle ein Ende der Mikrowellenfalle definiert. Bevorzugt ist der Fallenabschnitt am Durchgang mir der Hülle laserverschweißt. Die stellt ein besonders effizientes Herstellungsverfahren für die Mikrowellenfalle dar.

Ein weiterer Aspekt der Erfindung sieht vor, dass im Bereich der Öffnung des Fallenabschnitts ein ringförmiges Abschlusselement vorgesehen ist, das auf der Stirnseite des Füllelements aufliegt und den Umfang der Hülle vollständig umschließt, wobei das ringförmige Abschlusselement an der Hülle befestigt ist. Bevorzugt ist das ringförmige Abschlusselement mit der Hülle laserverschweißt.

Dadurch kann auf einfache Weise das Füllelement verliersicher im Fallenabschnitt gehalten werden. Zudem wird durch das Abschlusselement ein Verrutschen des Füllelements entlang der Hülle aus der Öffnung des Fallenabschnitts hinaus verhindert.

Ein weiterer Aspekt der Erfindung sieht vor, dass das Füllelement eine Keramik ist, beispielsweise eine Keramik mit einer Dielektrizitätskonstante von 9 bis 10 (im Normalzustand und im Betrieb des Gargeräts, insbesondere im Mikrowellenbetrieb). Die Verwendung einer Keramik ist von Vorteil, da eine Keramik hohen Temperaturen standhält, wodurch diese insbesondere für die Verwendung in einem Gargerät geeignet ist. Zudem kann durch das Vorsehen einer Keramik mit einer hohen Dielektrizitätskonstante als Dielektrikum die geometrische Länge des Fallenabschnitts bei gleichbleibender elektrischer Länge verringert werden.

Insbesondere die Keramik aus Aluminiumoxid mit einer Reinheit von mindestens 95 % gebildet. Aluminiumoxid weist im Vergleich zu anderen Keramiken eine hohe Wärmeleitfähigkeit auf, wodurch ein effizienter Wärmetransport aus der Mikrowellenfalle in die Umgebung erreicht werden kann. Ferner ist Aluminiumoxid korrosionsbeständig, chemisch inert und temperaturstabil.

Gemäß einem anderen Aspekt der Erfindung ist die Mikrowellenfalle als eine Lambda-Viertel-Falle ausgeführt. Eine Lambda-Viertel-Falle stellt eine bewährte Methode zum Dämpfen der Leistung von Mikrowellenstrahlen dar.

Bevorzugt weist der Fallenabschnitt der Mikrowellenfalle eine geometrische Länge auf, die der elektrischen Länge von in etwa einem Viertel der Wellenlänge der im Gargerät verwendeten elektromagnetischen Strahlung entspricht, sodass die Mikrowellenfalle auf die im Gargerät verwendete Strahlung abgestimmt ist. Dabei wird die elektrische Länge durch das dielektrische Füllelement im topfförmigen Fallenabschnitt insofern beeinflusst, dass die elektrische Länge verringert wird. Üblicherweise wird bei einem Kombinationsgargerät eine Mikrowellenstrahlung in einem Bereich von 2,45 Gigahertz (entspricht einer Wellenlänge von ca. 12 cm im Vakuum) in den Garraum eingespeist.

Ein weiterer Aspekt der Erfindung sieht vor, dass der Griffabschnitt einen Griff aufweist, der die Mikrowellenfalle mindestens teilweise umgibt. Somit kann der Kerntemperaturfühler sicher im Garraum gehandhabt werden, ohne dass der Fallenabschnitt angefasst werden muss. Insbesondere ist der Griff aus einem Kunststoff, bevorzugt PEEK gefertigt. Durch die Verwendung dieses Kunststoffs ist der Griff besonders hitzebeständig ausgeführt.

Ferner betrifft die Erfindung ein Kombinationsgargerät, mit einem Garraum, einem Mikrowellengenerator und einer Steuereinheit, die mit einem im Garraum vorgesehenen Kerntemperaturfühler nach einem der oben genannten Aspekte in Verbindung steht. Unter einem Kombinationsgargerät ist ein Gargerät zum Garen von Gargut gemeint, das neben dem Einsatz von Mikrowellenstrahlen, das Gargut zudem mittels Dampf und/oder Heißluft garen kann. Ein solches Gargerät erlaubt eine Kombination von verschiedenen Garmethoden, die entweder einzeln oder gemeinsam verwendet werden können.

Aufgrund der Verwendung eines Kerntemperaturfühlers nach den oben genannten Aspekten kann das erfindungsgemäße Kombinationsgargerät im Mikrowellenbetrieb den Kerntemperaturfühler verwenden, ohne dass es zu einer übermäßig starken Erhitzung des Griffabschnitts und/oder des Messabschnitts kommt. Da sich der Messabschnitt nicht lokal stark erwärmt, ist auch eine genauere Temperaturabfrage möglich, wodurch das Gargerät den Garvorgang präziser überwachen kann. Dies ermöglicht auch den Garvorgang genauer zu steuern und bessere Garergebnisse zu erzielen. Hingegen ermöglicht eine geringere Erwärmung des Griffabschnitts eine längere Haltbarkeit des Kerntemperaturfühlers.

Des Weiteren betrifft die Erfindung eine Mikrowellenfalle für einen Kerntemperaturfühler nach einem der oben genannten Aspekte, wobei die Mikrowellenfalle einen zylindrischen Fallenabschnitt aufweist, der topfförmig ausgebildet ist, sodass der Fallenabschnitt an einem ersten Ende einen Boden und an einem zweiten Ende eine Öffnung aufweist, wobei die Öffnung von einem Randbereich umgeben ist, wobei im Fallenabschnitt ein dielektrisches Füllelement angeordnet ist. Der Randbereich ist gegenüber dem Füllelement zumindest bereichsweise zurückgesetzt, sodass dieses über den Randbereich zumindest bereichsweise hervorsteht.

Die zuvor genannten Vorteile und Aspekte gelten in analoger Weise für die Mikrowellenfalle, sodass auf die vorherigen Ausführungen verwiesen wird.

Weitere Merkmale und Vorteile der Erfindung ergeben sich aus der nachfolgenden Beschreibung und den beigefügten Zeichnungen, auf die Bezug genommen wird. In den Zeichnungen zeigen:
- Figur 1 in einer schematischen Darstellung ein erfindungsgemäßes Kombinationsgargerät mit einem erfindungsgemäßen Kerntemperaturfühler;
- Figur 2 in einer schematischen Schnittansicht den erfindungsgemäßen Kerntemperaturfühler aus Figur 1;
- Figur 3 eine Draufsicht auf eine erfindungsgemäße Mikrowellenfalle, mit einem Fallenabschnitt und einem dielektrischen Füllelement gemäß einer ersten Variante;
- Figur 4 eine Perspektivansicht der erfindungsgemäßen Mikrowellenfalle aus Figur 3;
- Figur 5 in einer Draufsicht die erfindungsgemäße Mikrowellenfalle aus den Figuren 3 und 4 ohne dielektrisches Füllelement;
- Figur 6 eine Schnittansicht entlang der Schnittebene A-A der erfindungsgemäßen Mikrowellenfalle aus Figur 5;
- Figur 7 eine Perspektivansicht der Rückansicht der erfindungsgemäßen Mikrowellenfalle aus den Figuren 5 und 6;
- Figur 8 eine Perspektivansicht der Vorderansicht der erfindungsgemäßen Mikrowellenfalle aus Figur 7;
- Figur 9 eine Draufsicht auf eine erfindungsgemäße Mikrowellenfalle, mit einem Fallenabschnitt und einem dielektrischen Füllelement gemäß einer zweiten Variante;
- Figur 10 eine Schnittansicht entlang der Schnittebene B-B der erfindungsgemäßen Mikrowellenfalle aus Figur 9;
- Figur 11 eine Perspektivansicht des dielektrischen Füllelements aus den Figuren 3 und 9; und
- Figur 12 eine Schnittansicht entlang der Schnittebene C-C des dielektrischen Füllelements aus Figur 11.

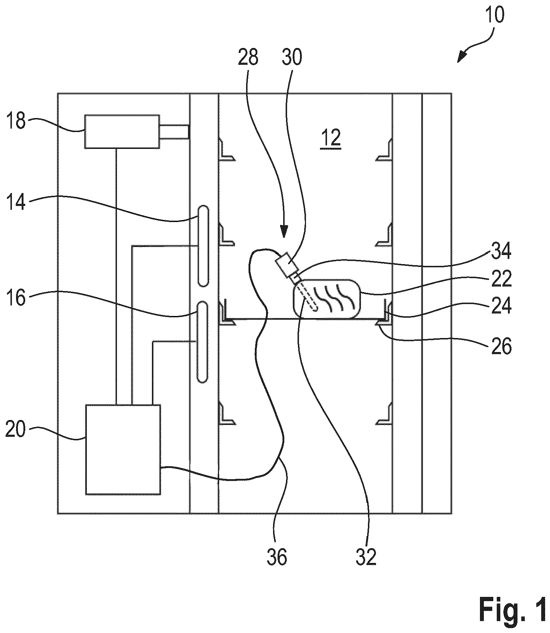

Figur 1 zeigt schematisch ein erfindungsgemäßes Kombinationsgargerät 10, das einen Garraum 12 aufweist.

Zudem sind im Kombinationsgargerät 10 eine Heizvorrichtung 14, ein Dampfgenerator 16 und ein Mikrowellengenerator 18 angeordnet, die jeweils mit einer Steuereinheit 20 verbunden sind und von dieser angesteuert werden.

Im Garraum 12 ist ein Gargut 22 eingebracht, das auf einem Gargutträger 24 platziert ist. Der Gargutträger 24 kann ein Blech, eine Schale oder ein Rost sein, das innerhalb des Garraums 12 in einem Einschub 26 eingeschoben ist.

Die Heizvorrichtung 14 und der Dampfgenerator 16 sind dazu eingerichtet, im Garraum 12 ein bestimmtes Garraumklima bereitzustellen. Das Garraumklima wird dabei von der Steuereinheit 20 vorgegeben, insbesondere in Abhängigkeit eines ablaufenden Garprogramms. Der Mikrowellengenerator 18 ist dazu ausgebildet, elektromagnetische Strahlung in Form von Mikrowellen mit einer Wellenlänge λ zu erzeugen und in den Garraum 12 einzuspeisen. Bevorzugt werden Mikrowellen mit einer Frequenz von 2,45 Gigahertz (entspricht einer Wellenlänge λ von 12,45 cm im Vakuum) in den Garraum 12 eingespeist. Die in den Garraum 12 eingebrachte Mikrowellenstrahlung kann das Gargut 22 mit (zusätzlicher) Energie beaufschlagen, wodurch das Gargut 22 gegart wird.

Außerdem ist im Garraum 12 ein Kerntemperaturfühler 28 vorgesehen, der dazu eingerichtet ist, die Kerntemperatur des Garguts 22 während eines Garvorgangs zu überwachen, sofern der Kerntemperaturfühler 28 in das Gargut 22 eingesteckt ist. Mittels des Kerntemperaturfühlers 28 kann bei einem Fleischstück wie einem Braten durch Messung der Kerntemperatur kontrolliert werden, wann der Braten den gewünschten Gargrad erreicht hat.

Der Kerntemperaturfühler 28 weist einen Griffabschnitt 30 und einen an den Griffabschnitt 30 angrenzenden Messabschnitt 32 auf. Der Griffabschnitt 30 ist dazu eingerichtet, dass ein Benutzer den Kerntemperaturfühler 28 dort anfassen kann.

Der Messabschnitt 32 erfüllt dagegen die eigentliche Funktion des Kerntemperaturfühlers 28, nämlich die Kerntemperatur im Inneren des Garguts 22 zu ermitteln. Um eine Kerntemperaturabfrage zu ermöglichen, ist der Kerntemperaturfühler 28 zumindest teilweise in das Gargut 22 eingesteckt. Dabei kann der Kerntemperaturfühler 28 über die komplette Länge des Messabschnitts 32, so wie in Figur 1 gezeigt, in das Gargut 22 eingesteckt sein oder auch nur teilweise, insbesondere bei kleinem oder weniger voluminösen Gargut 22.

Ferner weist der Kerntemperaturfühler 28 eine Mikrowellenfalle 34 auf, die am Übergang zwischen dem Messabschnitt 32 und dem Griffabschnitt 30 angeordnet ist. Im eingesteckten Zustand befindet sich die Mikrowellenfalle 34 also außerhalb des Garguts 22 oder liegt höchstens mit seiner Stirnseite an diesem an.

Die Mikrowellenfalle 34 ist dazu ausgebildet, bei eingeschaltetem Mikrowellenbetrieb des Kombinationsgargeräts 10, also wenn Mikrowellen in den Garraum 12 eingespeist werden, den Kerntemperaturfühler 28 vor der Energie der Mikrowellen zu schützen.

Um eine Fallenwirkung zu erreichen, ist die Mikrowellenfalle 34 als eine Lambda-Viertel-Falle ausgebildet, die auf die im Garraum 12 verwendete Wellenlänge der elektromagnetischen Strahlung abgestimmt ist. Dazu weist die Mikrowellenfalle 34 eine geometrische Länge (Fallentiefe) auf, die der elektrischen Länge von in etwa einem Viertel der Wellenlänge der im Gargerät 10 verwendeten elektromagnetischen Strahlung entspricht.

Der Kerntemperaturfühler 28 ist mit der Steuereinheit 20 über ein Kabel 36 signalübertragend verbunden. Auf diese Weise kann der Kerntemperaturfühler 28 die gemessene Kerntemperatur an die Steuereinheit 20 weiterleiten, damit diese den Garvorgang überwachen und gegebenenfalls unter Berücksichtigung der gemessenen Kerntemperatur den Garvorgang regeln kann.

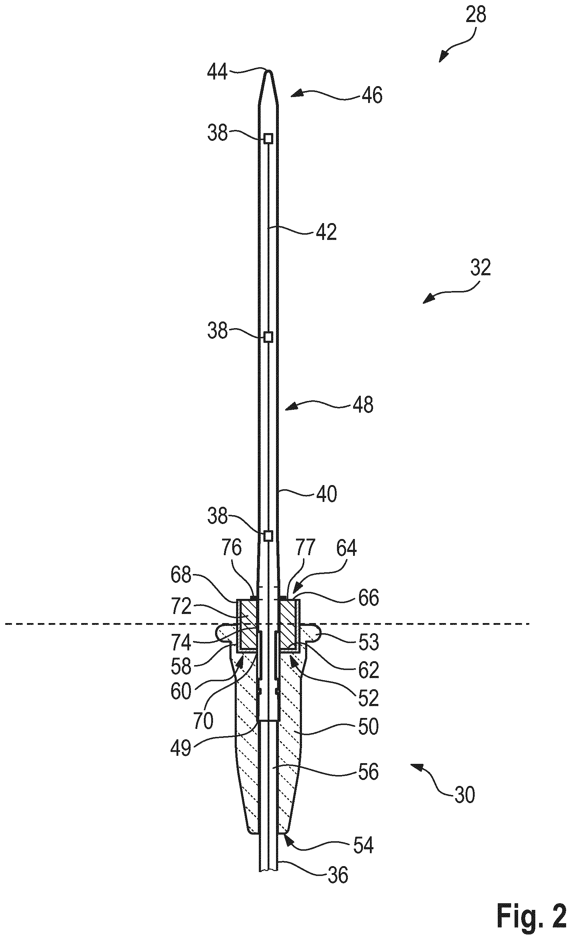

Weitere Details des Kerntemperaturfühlers 28 sind in Figur 2 näher erläutert, worauf nachfolgend Bezug genommen wird.

In Figur 2 ist der Kerntemperaturfühler 28 in zwei Abschnitte unterteilt, die in der Zeichnung durch eine gestrichelte Linie voneinander getrennt sind. Der Bereich oberhalb der gestrichelten Linie in Figur 2 ist der Messabschnitt 32, der in das Gargut 22 zumindest teilweise eingesteckt wird, um die Temperatur im Inneren des Garguts 22 zu messen. Unterhalb der gestrichelten Linie befindet sich der Griffabschnitt 30, der zur Handhabung des Kerntemperaturfühlers 28 dient. Auf Höhe der gestrichelten Linie und damit zwischen dem Messabschnitt 32 und dem Griffabschnitt 30 ist die Mikrowellenfalle 34 vorgesehen, also im Übergang.

Für die Temperaturerfassung sind entlang des Messabschnitts 32 mehrere Temperatursensoren 38 vorgesehen, vorliegend drei Temperatursensoren 38. Denkbar ist selbstverständlich jede andere Anzahl an Temperatursensoren. Bevorzugt sind die Temperatursensoren 38 gleichmäßig entlang des Messabschnitts 32 vorgesehen. Es kann auch wenigstens ein weiterer Temperatursensor 38 im Griffabschnitt 30 vorgesehen sein, der als Referenzmessung für die Garraumtemperatur oder als Teil eines Mikrowellenlastsensors fungieren kann.

Die Temperatursensoren 38 sind von einer Hülle 40 umgeben, die in der gezeigten Ausführungsform als ein Metallrohr ausgebildet ist. Außerdem ist in der Hülle 40 eine Leitung 42 vorgesehen, die sich entlang des Messabschnitts 32 erstreckt und die Temperatursensoren 38 untereinander verbindet. Ausgehend von den Temperatursensoren 38 erstreckt sich die Leitung 42 in den Griffabschnitt 30 hinein und mündet in das Kabel 36. Die von den Temperatursensoren 38 erfasste Kerntemperaturwerte können somit an die Steuereinheit 20 weitergegeben werden.

Damit die metallische Hülle 40 in das Gargut 22 eingesteckt werden kann, ist die Hülle 40 an seinem freien, von dem Griffabschnitt 30 abgewandten, Ende mit einer Spitze 44 versehen, woran ein Endabschnitt 46 angrenzt, der sich in Richtung Griffabschnitt 30 konisch aufweitet und in einen gerade verlaufenden Schaftabschnitt 48 mündet.

Genauer betrachtet beherbergt der Schaftabschnitt 48 die Leitung 42 und die Temperatursensoren 38.

Vom Endabschnitt 46 zum Griffabschnitt 30 erstreckt sich der Schaftabschnitt 48. Wie in Figur 2 gezeigt ist, endet der Schaftabschnitt 48 etwa auf halber Höhe des Griffabschnitts 30 in einem Schaftende 49.

Im Griffabschnitt 30 des Kerntemperaturfühlers 28 ist ein Griff 50 vorgesehen, der beispielswiese aus einem Kunststoff gefertigt ist, bevorzugt aus einem hitzebeständigen Kunststoff, insbesondere PEEK. Der Griff 50 weist eine in Richtung Messabschnitt 32 langgestreckte zylindrische Form auf, wobei der Griff 50 ein dem Messabschnitt 32 zugewandtes Ende und ein davon abgewandtes zweites Ende aufweist.

An seinem dem Messabschnitt 32 zugewandten Ende ist der Griff 50 mit einer fallenseitigen Öffnung 52 versehen, welche die Mikrowellenfalle 34 zumindest teilweise umgibt. Bevorzugt ist der Griff 50 um die Mikrowellenfalle 34 spritzgegossen, sodass die Mikrowellenfalle 34 fest im Bereich der fallenseitigen Öffnung 52 mit dem Griff 50 verbunden ist.

Außerdem weist der Griff 50 im Bereich um die fallenseitige Öffnung 52 einen Knauf 53 auf, der als ein durchgehender radialer Vorsprung ausgebildet ist, der die Mikrowellenfalle 34 vollständig umgibt. Der Knauf 53 dient dazu, den Kerntemperaturfühler 28 sicher zu handhaben, ohne dass ein Benutzer vom Griff 50 abrutscht.

An dem vom Messabschnitt 32 abgewandten Ende, das zur fallenseitigen Öffnung 52 entgegengesetzt liegt, weist der Griff 50 eine kabelseitige Öffnung 54 auf. Von der kabelseitigen Öffnung 54 bis zur fallenseitigen Öffnung 52 erstreckt sich ein Kabelkanal 56, der die Leitung 42 aufnimmt. Folglich kann der Griff 50 als ein Hohlzylinder ausgebildet sein. Auf halber Höhe des Kabelkanals 56, der in etwa der halben Höhe des Griffs 50 entspricht, befindet sich das Schaftende 49 der metallischen Hülle 40.

Wie bereits in Figur 1 gezeigt, ist am Übergang zwischen dem Griffabschnitt 30 und den daran angrenzenden Messabschnitt 32 die Mikrowellenfalle 34 vorgesehen, worauf nachfolgend eingegangen wird.

Figur 2 zeigt, dass die Mikrowellenfalle 34 einen zylindrischen Fallenabschnitt 58 umfasst, der topfförmig ausgebildet ist, sodass der Fallenabschnitt 58 an einem ersten Ende 60 einen Boden 62, der dem Griffabschnitt 30, und an einem zweiten Ende 64 eine Öffnung 66 aufweist, die dem Messabschnitt 32 zugewandt ist. Die beiden Enden 60, 64 sind entgegengesetzt zueinander. Demzufolge ist der Boden 62 dem Griffabschnitt 30 und die Öffnung 66 dem Messabschnitt 32 zugeordnet.

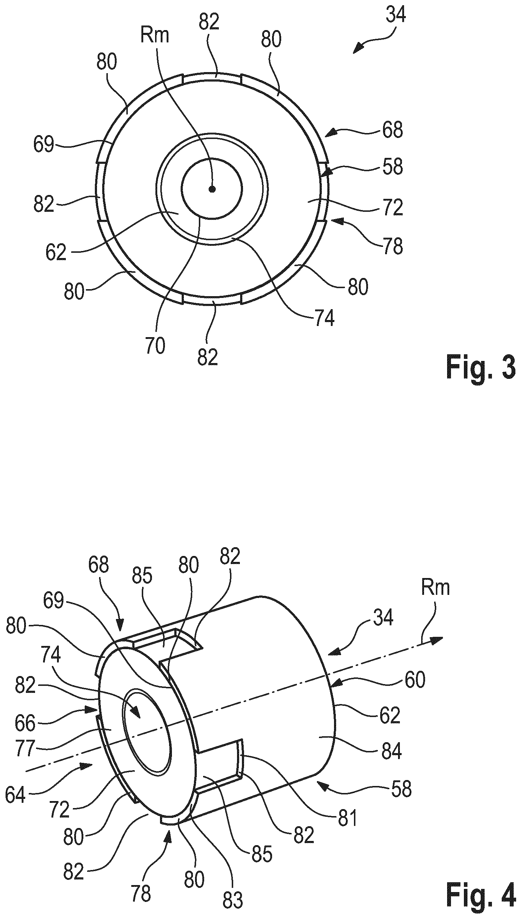

Die Öffnung 66 ist von einem Randbereich 68 umgeben, auf den später mit Bezug auf die Figuren 3 bis 9 noch näher eingegangen wird.

Zudem umgibt der Fallenabschnitt 58 die Hülle 40, die sich vom Messabschnitt 32 zum Griffabschnitt 30 durch einen Durchgang 70 im Boden 62 des Fallenabschnitts 58 hindurch erstreckt. Hierbei ist der Fallenabschnitt 58 am Durchgang 70 mit der Hülle 40 kontaktiert. Insbesondere ist der Fallenabschnitt 58 mit der Hülle 40 am Durchgang 70 laser-verschweißt. Mit anderen Worten ist der Boden 62 bis zur Hülle 40 geschlossen ausgebildet.

Ferner weist die Mikrowellenfalle 34 ein dielektrisches Füllelement 72 auf, das im Fallenabschnitt 58 angeordnet ist. Genauer gesagt ist das dielektrische Füllelement 72 zwischen der Hülle 40 und dem Fallenabschnitt 58 angeordnet.

Das Füllelement 72 kontaktiert beispielsweise über eine Stirnseite den Boden 62 des Fallenabschnitts 58 sowie entlang seines Außenumfangs eine Innenseite des Fallenabschnitts 58.

Beispielsweise kann das dielektrische Füllelement 72 eine Keramik mit einer Dielektrizitätskonstante von 9 bis 10 (bei 20°C und 1 GHz) sein, insbesondere eine Keramik aus Aluminiumoxid mit einer Reinheit von mindestens 95 %.

Um den Verlauf der Hülle 40 vom Messabschnitt 32 hin in den Griffabschnitt 30 zu ermöglichen, ist das dielektrische Füllelement 72 als ein Hohlzylinder geformt, der eine Durchgangsöffnung 74 aufweist, die mit dem Durchgang 70 im Boden 62 fluchtet, sodass sich die Hülle 40 durch den Durchgang 70 und die Durchgangsöffnung 74 zumindest teilweise erstreckt.

Wie in Figur 2 gut zu erkennen ist, erstreckt sich die Hülle 40 in der gezeigten Ausführungsform vollständig durch die Durchgangsöffnung 74 durch das Füllelement 72 hindurch. Insofern erstreckt sich die Hülle 40 auch vollständig durch den Fallenabschnitt 58 hindurch. Dies führt dazu, dass das Füllelement 72, die Hülle 40 und der Fallenabschnitt 58 koaxial zueinander angeordnet sind.

Außerdem ist im Bereich um die Öffnung 66 des Fallenabschnitts 58 ein ringförmiges Abschlusselement 76 vorgesehen, das auf der Stirnseite 77 des Füllelements 72 aufliegt und den Umfang der Hülle 40 vollständig umschließt, wobei das ringförmige Abschlusselement 76 an der Hülle 40 befestigt ist, insbesondere laser-verschweißt. Das ringförmige Abschlusselement 76 dient dazu, das dielektrische Füllelement 72 verliersicher in der Mikrowellenfalle 34 zu halten.

Bevorzugt ist das ringförmige Abschlusselement 76 aus einem elektrisch leitenden Material gefertigt. Besonders bevorzugt ist das ringförmige Abschlusselement 76 aus einem Metall oder einer Legierung hergestellt.

Die Mikrowellenfalle 34 ist ausgelegt, ein übermäßiges Erhitzen des Griffs 50 und damit des gesamten Kerntemperaturfühlers 28 zu verhindern. Darüber hinaus ist aufgrund der Ausgestaltung der Mikrowellenfalle 34 sichergestellt, dass sich das Gargut 22 nicht überproportional im Bereich des eingesteckten Messabschnitts 32 erhöht.

Dies kann durch zwei verschiedene Varianten der Mikrowellenfalle 34 erreicht werden, die nachfolgend näher erläutert werden.

Die erste Variante wird nachfolgend anhand der Figuren 3 bis 8 näher erläutert.

In Figur 3 ist eine Draufsicht auf eine Mikrowellenfalle 34 vom Messabschnitt 32 aus betrachtet gezeigt. Zu erkennen ist der Fallenabschnitt 58, in dem das dielektrische Füllelement 72 als Hohlzylinder angeordnet ist. Sowohl der Fallenabschnitt 58 als auch das dielektrische Füllelement 72 sind im Querschnitt kreiszylindrisch geformt.

Der Innendurchmesser des Fallenabschnitts 58 und der Außendurchmesser des dielektrischen Füllelements 72 sind derart aufeinander abgestimmt, dass der Umfang des dielektrische Füllelements 72 an einer Innenwand 69 des Fallenabschnitts 58 anliegt.

Darüber hinaus ist zu erkennen, dass der Randbereich 68 des Fallenabschnitts 58 den Umfang des Füllelements 72 vollständig umgibt, also rahmenartig umschließt. Insbesondere ist das dielektrische Füllelement 72 in den Fallenabschnitt 58 eingesetzt.

Außerdem ist der Durchgang 70 mit der Durchgangsöffnung 74 fluchtend angeordnet, sodass der Fallenabschnitt 58 und das Füllelement 72 dieselbe Rotationsmittelachse Rₘ aufweisen, also koaxial zueinander angeordnet sind.

Ferner ist der Randbereich 68 mit einer kammartigen Struktur 78 versehen. Diese ist besonders gut in der isometrischen Ansicht der Mikrowellenfalle 34 gemäß der Figuren 4, 7 und 8 erkennbar.

Die kammartige Struktur 78 umfasst mindestens zwei Zahnelemente 80, die von Aussparungen 82 getrennt sind, insbesondere vier Zahnelemente 80, wobei zwischen zwei benachbarten Zahnelementen 80 jeweils eine Aussparung 82 vorgesehen ist.

Die Zahnelemente 80 erstrecken sich mit ihren freien Enden in Richtung des Messabschnitts 32. Hierbei schließt sich das dielektrische Füllelement 72 bündig an die freien Enden der Zahnelemente 80 an. Folglich liegen die freien Enden der Zahnelemente 80 und die Stirnseite 77 des dielektrischen Füllelements in einer gemeinsamen Ebene, die orthogonal zur Rotationsmittelachse Rₘ der Mikrowellenfalle 34 angeordnet ist.

Jedoch ist der der Randbereich 68 der Öffnung 66 gegenüber dem dielektrischen Füllelement 72 zumindest bereichsweise zurückgesetzt, nämlich im Bereich der Aussparungen 82 zwischen den Zahnelementen 80, wie unter anderem aus Figur 4 deutlich wird. Hierdurch ist eine freiliegende Oberfläche des dielektrischen Füllelements 72 geschaffen. Diese ist durch vier Teiloberflächen 85 gebildet, welche jeweils im Bereich der Aussparungen 82 vorliegen. Die Teiloberflächen 85 dienen dazu, den Wärmeabtransport zwischen dem dielektrischen Füllelement 72 und der Umgebung zu gewährleisten.

In der gezeigten Ausführungsform weist die kammartige Struktur 78 insgesamt vier Zahnelemente 80 und vier Aussparungen 82 auf. Denkbar ist aber auch jede beliebige Anzahl an Zahnelementen 80, beispielsweise 2, 3, 5, 6, 7, 8, 9 oder 10.

Bevorzugt sind die Zahnelemente 80 entlang des Randbereichs 68 gleichmäßig verteilt.

In der gezeigten Ausführungsform sind die Zahnelemente 80 in ihrer Grundform rechteckig ausgeführt, also in ihrer Projektion auf eine Ebene. Dasselbe gilt auch für die Aussparungen 82. Folglich weist die kammartige Struktur 78 eine gestufte Form auf, die aus insgesamt zwei verschiedenen (rechteckigen) Stufen 81, 83 besteht.

Grundsätzlich sind aber auch andere Formen für die die Zahnelemente 80 und/oder die Aussparungen denkbar, beispielsweise dreieckige Formen oder abgerundete Formen, sodass die kammartige Struktur 78 und die verschiedenen Stufen 81, 83 hinsichtlich ihrer Form entsprechend anders ausgebildet ist.

Die unterschiedlichen Stufen 81, 83 ergeben sich daraus, dass der Randbereich 68 gegenüber dem dielektrischen Füllelement 72 zumindest bereichsweise zurückgesetzt ist, nämlich im Bereich der Aussparungen 82, sodass das dielektrische Füllelement 72 zumindest bereichsweise über den Randbereich 68 in Richtung Messabschnitt 32 hervorsteht, nämlich auch im Bereich der Aussparungen 82, wie aus Figur 4 deutlich wird.

Mit anderen Worten bildet die Aussparung 82 die erste Stufe 81 und das Zahnelement 80 die zweite Stufe 83. Die Wirkung der ersten Stufe 81 und der zweiten Stufe 83 auf eintretende Mikrowellen wird weiter unten näher erläutert.

Die Zahnelemente 80 sind zusammen einstückig mit einer Umfangswand 84 ausgeführt, die sich von den Zahnelementen 80 aus in Richtung des Griffabschnitts 30 erstreckt und mit dem Boden 62 abschließt. Genauer betrachtet ist die Umfangswand 84 im Querschnitt kreisringförmig.

Die Umfangswand 84 bildet den Grundkörper (Basis) des topfförmigen Fallenabschnitts 58, vom dem aus sich der Boden 62 und die Zahnelemente 80 erstrecken.

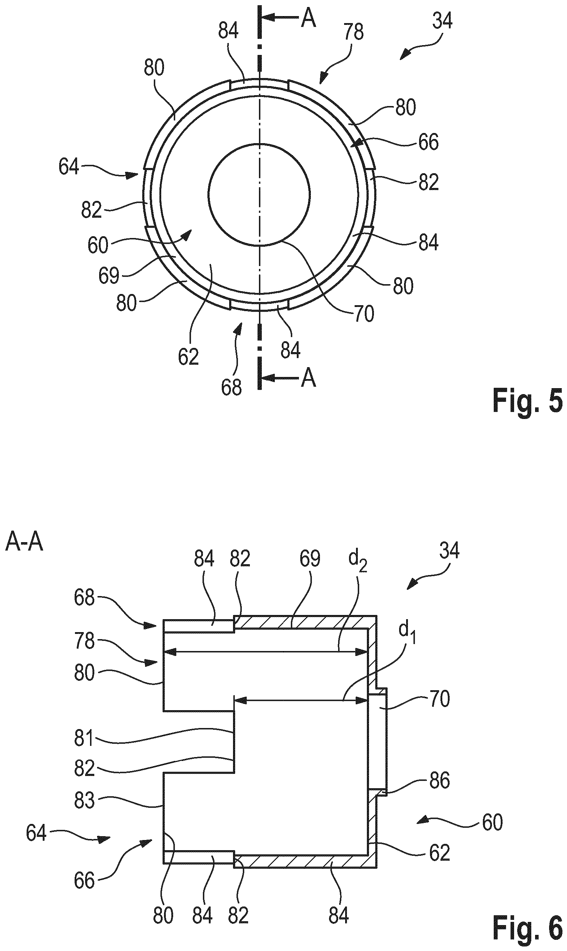

Nachfolgend wird die erste Stufe 81 der Aussparungen 82 und die zweite Stufe 83 der Zahnelemente 80 näher erläutert. Hierzu wird auf die Schnittansicht des Fallenabschnitts 58 aus Figur 5 entlang der Schnittebene A-A Bezug genommen, die in Figur 6 gezeigt ist. Der Übersicht halber ist das dielektrische Füllelement 72 weggelassen.

Durch die ersten Stufen 81 und die zweiten Stufen 83 ergeben sich zwei verschiedene geometrische Längen innerhalb des Fallenabschnitts 58 in Bezug zum Boden 62 der Mikrowellenfalle 34. Diese geometrischen Längen können auch als Fallentiefe aufgefasst werden. Der Abstand von der ersten Stufe 81 zum Boden 62 ist als Fallentiefe d₁ bezeichnet und der Abstand von der zweiten Stufe 83 bis zum Boden 62 ist als Fallentiefe d₂ bezeichnet. Es gilt die Beziehung, wonach die Fallentiefe d₁ kleiner ist als die Fallentiefe d₂.

Aufgrund der zwei verschiedenen Fallentiefen innerhalb derselben Mikrowellenfalle 34, besteht diese im Grunde genommen aus zwei verschiedenen Mikrowellenfallen, die jeweils der ersten Stufe 81 oder der zweiten Stufe 83 entsprechen.

Insbesondere weisen die Fallentiefen d₁ und d₂ im Mittel (d.h. (d₁+d₂)/2) eine geometrische Länge auf, die der elektrischen Länge von in etwa einem Viertel der Wellenlänge der im Gargerät 10 verwendeten elektromagnetischen Strahlung entspricht. Zu beachten ist, dass die elektrische Länge durch das vorhandene dielektrische Füllelement 72 zwischen dem Fallenabschnitt 58 und der Hülle 40 beeinflusst wird. Insbesondere wird durch das dielektrische Füllelement 72 die elektrische Länge verkürzt, sodass insgesamt eine geringere geometrische Länge von d₁ und d₂ erforderlich ist, um eine Fallenwirkung für die verwendete Mikrowellenstrahlung zu erzielen.

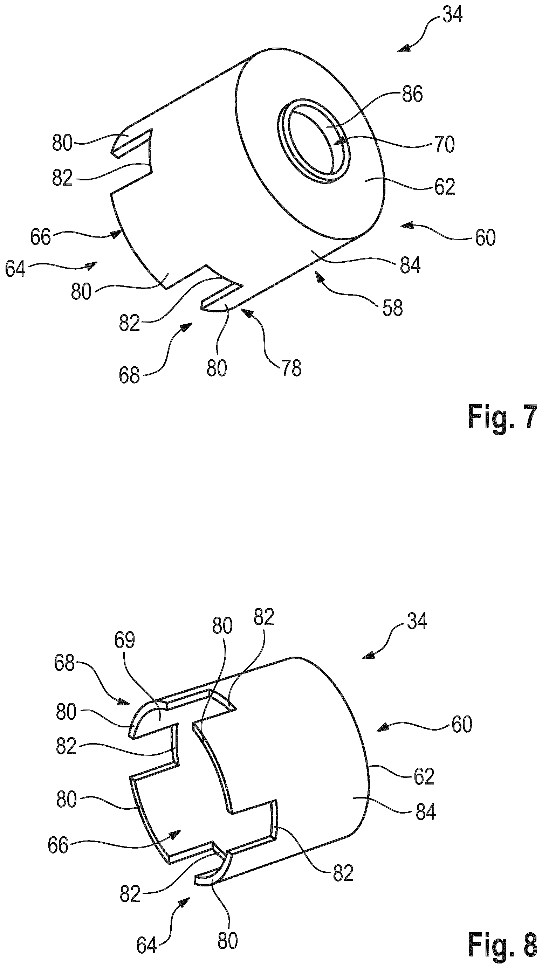

Die Figuren 7 und 8 zeigen weitere isometrische Darstellungen des Fallenabschnitts 58 ohne das dielektrische Füllelement 72.

In Figur 7 ist gezeigt, dass der Durchgang 70 im Boden 62 von einem umlaufenden Kragen 86 begrenzt wird. Der Kragen 86 steht in Richtung Griffabschnitt 30 hervor und ist ringförmig ausgebildet. An dem Kragen 86 kann die Hülle 40 verschweißt werden, bevorzugt laser-verschweißt.

Bevorzugt ist der gesamte Fallenabschnitt 58, zusammen mit den Zahnelementen 80, den Aussparungen 82, der Umfangswand 84, dem Boden 62, dem Kragen 86 und dem Durchgang 70 aus einem elektrisch leitenden Material gefertigt. Besonders bevorzugt sind diese aus einem Metall oder einer Legierung hergestellt. Ganz besonders bevorzugt ist der gesamte Fallenabschnitt 58 zusammen mit den Zahnelementen 80, den Aussparungen 82, der Umfangswand 84, dem Boden 62, dem Kragen 86 und dem Durchgang 70 zusammen einstückig ausgeführt, besonders bevorzugt aus einem Stück Metall oder Legierung gefräst.

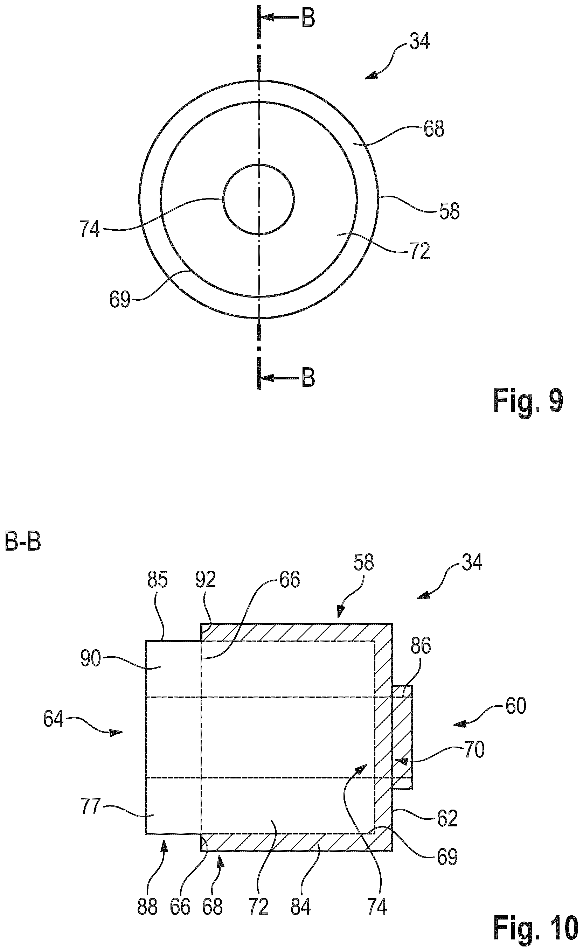

Die zweite erfindungsgemäße Variante der Mikrowellenfalle 34 ist in den Figuren 9 und 10 gezeigt, auf die nachfolgend näher eingegangen wird.

Die Mikrowellenfalle 34 in den Figuren 9 und 10 entspricht im Wesentlichen der ersten Variante, die bereits weiter oben erläutert wurde. Insofern wird im Folgenden nur auf die Unterschiede in Bezug auf den Randbereich 68 eingegangen. Hinsichtlich der übrigen Merkmale wird auf die vorstehende Beschreibung verwiesen.

Die Unterschiede zu der ersten Variante sind in der Querschnittsansicht entlang der Schnittebene B - B in Figur 10 erkennbar.

In der Schnittebene B-B ist gezeigt, dass der Randbereich 68 gegenüber den dielektrischen Füllelement 72 (vollständig umfangsmäßig) zurückgesetzt ist, sodass dass dielektrische Füllelement 72 über den Randbereich 68 in Richtung Messabschnitt 32 hervorsteht.

Mit anderen Worten weist das dielektrische Füllelement 72 einen Überstand 88 in Form eines scheibenförmigen Abschnitts 90 auf, der über den Randbereich 68 hervorsteht. Insbesondere ist der scheibenförmige Abschnitts 90 im Querschnitt kreiszylindrisch ausgebildet.

Zudem ist der Randbereich 68 stufenlos, ringförmig ausgebildet und umgibt den Umfang des Füllelements 72 vollständig, wie auch in Figur 9 gezeigt.

Im Übrigen weist auch der Überstand 88 zwischen seiner Stirnseite 77 und dem ringförmigen Stegabschnitt 92 des Randbereichs 68 eine seitliche, offene Fläche 85 auf.

Die seitliche Fläche 85 ist eine zusammenhänge Kreiszylindermantelfläche, nämlich die des scheibenförmigen Abschnitts 90. Die Fläche 85 dient zum besseren Wärmeabtransport aus der Mikrowellenfalle 34.

Insofern ist auch in dieser Ausführungsform der Randbereich 68 gegenüber dem dielektrischen Füllelement 72 zumindest bereichsweise zurückgesetzt, sodass dieses zumindest bereichsweise über den Randbereich 68 in Richtung Messabschnitt 32 hervorsteht, nämlich mit dem Überstand 88.

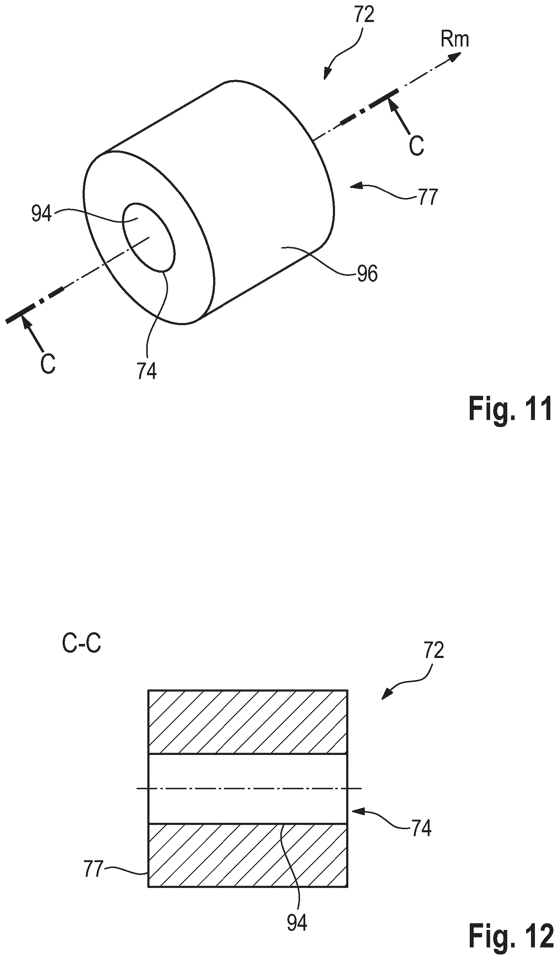

Die Figuren 11 und 12 zeigen jeweils eine isometrische Darstellung des dielektrischen Füllelements 72 sowie eine Querschnittsansicht entlang der Schnittebene C-C von dem dielektrischen Füllelement 72. Wie bereits weiter oben erläutert wurde, weist das dielektrische Füllelement 72 im Wesentlichen die Form eines Hohlzylinders auf und ist im Querschnitt bezogen auf den Außenumfang kreisringförmig. Außerdem umfasst das dielektrische Füllelement 72 die Durchgangsöffnung 74, die ebenfalls im Querschnitt kreisrund geformt ist.

Bevorzugt ist die Durchgangsöffnung 74 mittig an der Seite des Füllelements 72 vorgesehen, die entgegengesetzt zu der Stirnseite 77 angeordnet ist. Von der Durchgangsöffnung 74 aus erstreckt sich ein Führungskanal 94 mittig durch den Grundkörper 96 des dielektrischen Füllelements 72 vollständig hindurch.

Der Führungskanal 94 weist den gleichen Querschnitt auf wie die Durchgangsöffnung 74 und ist im Wesentlichen kreiszylindrisch ausgebildet. Insofern ist das dielektrische Füllelement 72 rotationssymmetrisch in Bezug zur der Rotationsmittelachse Rₘ, die sich mittig entlang dem Führungskanal 94 verläuft.

Grundsätzlich stellt die Mikrowellenfalle 34, insbesondere der gegenüber dem dielektrischen Füllelement 72 zumindest bereichsweise zurückgesetzte Randbereich sicher, dass eine übermäßige Erwärmung in sensiblen Bereichen vermieden wird, da die bei der Absorption von Mikrowellen entstehende Wärme besser aus dem Fallenabschnitt 58 an die Umgebung abgegeben werden kann.

Ferner kann die Ausgestaltung der Randbereiche 68 den Vorteil bieten, dass die Fallenwirkung breitbandiger wird, da eine erste Stufe 81 und eine zweite Stufe 83 vorgesehen ist, die als zwei hinsichtlich ihres Resonanzbereichs als gegeneinander verschobenen Lambda-Viertel Fallen wirken.

Grundsätzlich kann der Randbereich 68 zumindest bereichsweise um eine Länge von 2 bis 10 Millimeter gegenüber dem Füllelement 72 zurückgesetzt sein. Ganz besonders bevorzugt ist der Randbereich 68 um eine Länge von 3 bis 6 Millimeter zurückgesetzt. Dies kann entweder die Aussparungen 82 betreffen, wie dies für die erste Variante in den Figuren 3 bis 8 gezeigt ist, oder den gesamten Fallenabschnitt 58, wie dies für die zweite Variante in den Figuren 9 und 10 gezeigt ist.

## Patentansprüche

1. Kerntemperaturfühler (28) für ein Kombinationsgargerät (10), mit einem Messabschnitt (32) und einem an den Messabschnitt (32) angrenzenden Griffabschnitt (30), wobei der Kerntemperaturfühler (28) eine Mikrowellenfalle (34) aufweist, die einen zylindrischen Fallenabschnitt (58) aufweist, der topfförmig ausgebildet ist, sodass der Fallenabschnitt (58) an einem ersten Ende (60) einen Boden (62) und an einem zweiten Ende (64) eine Öffnung (66) aufweist, die dem Messabschnitt (32) zugewandt ist, wobei die Öffnung (66) von einem Randbereich (68) umgeben ist, wobei im Fallenabschnitt (58) ein dielektrisches Füllelement (72) angeordnet ist, und wobei der Randbereich (68) gegenüber dem Füllelement (72) zumindest bereichsweise zurückgesetzt ist, sodass dieses zumindest bereichsweise über den Randbereich (68) in Richtung Messabschnitt (32) hervorsteht.

2. Kerntemperaturfühler (28) nach Anspruch 1, **dadurch gekennzeichnet, dass** der Randbereich (68) eine kammartige Struktur (78) aufweist, die mindestens zwei, von einer Aussparung (82) getrennte Zahnelemente (80) umfasst, die sich mit ihren freien Enden in Richtung Messabschnitt (32) erstrecken, wobei sich das Füllelement (72) an die freien Enden der Zahnelemente (80) bündig anschließt.

3. Kerntemperaturfühler (28) nach Anspruch 2, **dadurch gekennzeichnet, dass** die Zahnelemente (80) entlang des Randbereichs (68) gleichmäßig verteilt sind.

4. Kerntemperaturfühler (28) nach Anspruch 1, **dadurch gekennzeichnet, dass** der Randbereich (68) den Umfang des Füllelements (72) stufenlos und ringförmig umgibt.

5. Kerntemperaturfühler (28) nach einem der vorhergehenden Ansprüche, **dadurch gekennzeichnet, dass** der Randbereich (68) zumindest bereichsweise um eine Länge von 2 bis 10 mm gegenüber dem Füllelement (72) zurückgesetzt ist.

6. Kerntemperaturfühler (28) nach einem der vorhergehenden Ansprüche, **dadurch gekennzeichnet, dass** das Füllelement (72) über eine Stirnseite den Boden (62) des Fallenabschnitts (58) sowie entlang seines Außenumfangs eine Innenseite des Fallenabschnitts (58) kontaktiert.

7. Kerntemperaturfühler (28) nach einem der vorhergehenden Ansprüche, **dadurch gekennzeichnet, dass** der Fallenabschnitt (58) eine Hülle (40) umgibt, die sich vom Messabschnitt (32) zum Griffabschnitt (30) durch einen Durchgang (70) im Boden (62) des Fallenabschnitts (58) hindurch erstreckt.

8. Kerntemperaturfühler (28) nach Anspruch 7, **dadurch gekennzeichnet, dass** das Füllelement (72) als ein Hohlzylinder geformt ist, das eine Durchgangsöffnung (74) aufweist, die mit dem Durchgang (70) im Boden (62) fluchtet, sodass sich die Hülle (40) durch den Durchgang (70) und die Durchgangsöffnung (74) zumindest teilweise erstreckt, wobei sich die Durchgangsöffnung (74) vollständig durch das Füllelement (72) hindurch erstreckt.

9. Kombinationsgargerät (28), mit einem Garraum (12), einem Mikrowellengenerator (18) und einer Steuereinheit (20), die mit einem im Garraum (12) vorgesehenen Kerntemperaturfühler (28) nach einem der vorhergehenden Ansprüche in Verbindung steht.

10. Mikrowellenfalle (34) für einen Kerntemperaturfühler (28) nach einem der Ansprüche 1 bis 8, wobei die Mikrowellenfalle (34) einen zylindrischen Fallenabschnitt (58) aufweist, der topfförmig ausgebildet ist, sodass der Fallenabschnitt (58) an einem ersten Ende (60) einen Boden (62) und an einem zweiten Ende (64) eine Öffnung (66) aufweist, wobei die Öffnung (66) von einem Randbereich (68) umgeben ist, wobei im Fallenabschnitt (58) ein dielektrisches Füllelement (72) angeordnet ist, wobei der Randbereich (68) gegenüber dem Füllelement (72) zumindest bereichsweise zurückgesetzt ist, sodass dieses zumindest bereichsweise über den Randbereich (68) hervorsteht.
